# EUROPEAN PATENT SPECIFICATION

(11) **EP 2 617 853 B1**
(45) Date of publication and mention of the grant of the patent: **13.02.2019**
(21) Application number: 11825310.3
(22) Date of filing: 15.09.2011
(51) Int. Cl.: C22C 38/00, C21D 8/02, C21D 9/46, C22C 38/14, C22C 38/58, C22C 38/18, C22C 38/40, C22C 38/02, C22C 38/04, C22C 38/06, C22C 38/08, C22C 38/12, C22C 38/16, C22C 38/28

(54) **HIGH-STRENGTH HOT-ROLLED STEEL SHEET HAVING SUPERIOR FATIGUE RESISTANCE PROPERTIES AND METHOD FOR PRODUCING SAME**
HOCHFESTES HEISSGEWALZTES STAHLBLECH MIT HERVORRAGENDER MATERIALERMÜDUNGSFESTIGKEIT UND VERFAHREN ZU SEINER HERSTELLUNG
TÔLE D'ACIER LAMINÉE À CHAUD À HAUTE RÉSISTANCE PRÉSENTANT DES PROPRIÉTÉS SUPÉRIEURES DE RÉSISTANCE À LA FATIGUE ET SON PROCÉDÉ DE PRODUCTION

(30) Priority: 17.09.2010 JP 2010210188
(43) Date of publication of application: 24.07.2013
(73) Proprietor: JFE Steel Corporation, Tokyo 100-0011 (JP)
(72) Inventor: NAKAJIMA, Katsumi, Tokyo 100-0011 (JP); SAITO, Hayato, Tokyo 100-0011 (JP); FUNAKAWA, Yoshimasa, Tokyo 100-0011 (JP); MORIYASU, Noriaki, Tokyo 100-0011 (JP); MURATA, Takayuki, Tokyo 100-0011 (JP)
(74) Representative: Hoffmann Eitle
(86) International application number: PCT/JP2011/071764
(87) International publication number: WO 2012/036312

(56) References cited:
- EP-A1- 2 053 139
- EP-A1- 2 559 783
- JP-A- 2000 109 951
- JP-A- 2001 220 647
- JP-A- 2007 239 049
- JP-A- 2008 069 425
- JP-A- 2008 156 681
- JP-A- 2009 270 142
- JP-A- 2009 280 900
- JP-A- 2010 196 163
- US-B1- 6 364 968

## Description

### [Technical Field]

The present invention relates to a high strength hot rolled steel sheet suitable as a material for automobile chassis, structural parts, frameworks, and frames for trucks and in particular to improvements of fatigue resistance. Here, "high strength" means that the tensile strength TS is 780 MPa or more.

### Background Art

In recent years, regulations on exhaust gas have been tightened from the viewpoint of preserving global environments. Under such trends, improvements of automobile fuel efficiency have been strongly demanded. To meet such a demand, automobile bodies have become increasingly lightweight and parts have become increasingly thinner due to use of high-tensile-strength materials. With the increase in strength of materials for automobile parts, there is an increasing demand for improving the workability of the materials and enhancing the fatigue strength to compensate for the thickness reduction of the parts.

To meet such a need, for example, Patent Literature 1 discloses a high strength hot rolled steel sheet having excellent fatigue resistance and stretch flangeability, the high strength hot rolled steel sheet having a composition including, in terms of mass%, C: 0.01 to 0.10%, Si: 2.0% or less, Mn: 0.5 to 2.5%, and a total of 0.5 or less of one or more selected from V: 0.01 to 0.30%, Nb: 0.01 to 0.30%, Ti: 0.01 to 0.30%, Mo: 0.01 to 0.30%, Zr: 0.01 to 0.30%, and W: 0.01 to 0.30%, in which the volume fraction of bainite is 80% or more, the average particle diameter r of precipitates is equal to or higher than a value obtained by a specific formula based on an average atomic weight ratio of elements constituting the precipitates, and the ratio r/f of the average particle diameter r to the volume fraction f of the precipitates is 12,000 or less. According to the technology described in Patent Literature 1, the microstructure is controlled to have bainite as a main structure and bainite is precipitation-strengthened with carbides of Nb, V, Ti, and the like so as to improve the strength, increase the stretch flangeability, and appropriately coarsen the precipitates and to thereby ensure high fatigue strength. It is also described that in order to appropriately coarsen the precipitates, a treatment of holding a cooling rate of 5°C/hr or less is preferably conducted for 20 hours or longer after the coiling.

Patent Literature 2 describes a high strength hot rolled steel sheet that has excellent stretch flangeability and a fracture appearance transition temperature of 0°C or less, the high strength hot rolled steel sheet containing, in terms of mass%, C: 0.05 to 0.15%, Si: 1.50% or less, Mn: 0.5 to 2.5%, P: 0.035% or less, Al: 0.020 to 0.15%, and Ti: 0.05 to 0.2%, and having a microstructure that contains 60 to 95 vol% of bainite and a solution-strengthened or precipitation-strengthened ferrite or ferrite and martensite. According to the technology described in Patent Literature 2, the sheet after coiling is cooled at a cooling rate of 50°C/hr or more to a temperature of 300°C or less so that diffusion of P into grain boundaries can be prevented, the fracture appearance transition temperature becomes 0°C or less, and the toughness and flangeability are improved.

Patent Literature 3 describes a low yield ratio high strength hot rolled steel sheet that contains, in terms of wt%, C: 0.18% or less, Si: 0.5 to 2.5%, Mn: 0.5 to 2.5%, P: 0.05% or less, S: 0.02% or less, Al: 0.01 to 0.1%, and one or both of Ti: 0.02 to 0.5% and Nb: 0.02 to 1.0% while C, Ti, and Nb are contained to satisfy a particular relationship, and has a microstructure containing martensite and ferrite in which carbides of Ti and Nb are precipitated or a microstructure containing a retained austenite, martensite, and ferrite in which carbides of Ti and Nb are precipitated. According to the technology described in Patent Literature 3, a high-density mobile dislocation network is formed near the second phase to achieve a low yield ratio, and the presence of the second phase prevents propagation of fatigue cracks and improves fatigue resistance.

Patent Literature 4 constitutes prior art under Art. 54(3) EPC and relates to a high strength hot-rolled steel sheet having a tensile strength (TS) of not less than 780 MPa and exhibiting excellent stretch flangeability and excellent fatigue resistance. This document also discloses a method for manufacturing the hot-rolled steel sheet.

Patent Literature 5 relates to a thin high-strength hot-rolled steel sheet with a thickness of not more than 3.5 mm which has excellent stretch flangeability and high uniformity in both shape and mechanical properties of the steel sheet, as well as a method of producing the same.

Patent Literature 6 relates to a method for producing a high-strength hot-rolled steel sheet having ≥780 MPa of TS and excellent stretch flange formability.

Patent Literature 7 relates to a high strength cold-rolled steel plate having a tensile strength of 780 MPa or more, an excellent balance of strength and elongation and, moreover, a balance of strength and hole expanding ratio and an excellent stretch flange workability, and also provides a method for producing the same.

### [Citation List]

### [Patent Literature]

[PTL 1] Japanese Unexamined Patent Application Publication No. 2009-84637
[PTL 2] Japanese Patent No. 3889766
[PTL 3] Japanese Patent No. 3219820
[PTL 4] EP 2 559 783 A1
[PTL 5] US 6,364,968 B1
[PTL 6] JP 2009-280900
[PTL 7] JP 2001-220647

### [Summary of Invention]

### [Technical Problem]

However, according to the technology described in Patent Literature 1, a desired high strength is achieved by precipitation strengthening through precipitates that have been appropriately coarsened. Thus, compared to the case in which strengthening is achieved with fine precipitates, large quantities of expensive alloy elements must be contained and thus there is a problem in that the cost of the material is high. According to the technology described in Patent Literature 1, a high coiling temperature of 500°C or more is employed to appropriately coarsen the precipitates. When the coiling temperature is high, inner oxide layers form in the steel sheet surfaces during coiling, the crystal grain boundaries near the surface layers become brittle, and this accelerates generation and propagation of fatigue cracks. It should also be noted that according to the technology described in Patent Literature 1, the fatigue resistance is evaluated by using a fatigue test piece prepared by grinding each of the front surface and the back surface by 0.5 mm. Regarding the fatigue phenomenon of a thin steel sheet, since the state of the surface layer having a depth of several hundred micrometers from the surface greatly affects generation of fatigue cracks, the technology described in Patent Literature 1 has a problem in that the fatigue properties of the thin steel sheet including the surface layer are not sufficiently evaluated.

According to the technology described in Patent Literature 2, it is described that the stretch flangeability is improved by preventing P from segregating in grain boundaries. However, Patent Literature 2 does not describe improvements of fatigue resistance and preventing segregation of P in grain boundaries does not directly or necessarily contribute to improving the fatigue resistance.

According to the technology described in Patent Literature 3, the fatigue resistance is improved by precipitation-strengthening the ferrite phase and decreasing the difference in strength between the ferrite phase and the martensite phase. However, the ferrite phase and the martensite phase differ from each other in terms of plastic deformability and deformation behavior; moreover, the interface between the ferrite phase and the martensite phase is likely to serve as a starting point of fatigue cracks. Thus, the fatigue resistance desired in the present invention is not satisfied.

The present invention advantageously resolve the problems of the related art described below and aims to provide a high strength hot rolled steel sheet having excellent fatigue resistance and a method for manufacturing the high strength hot rolled steel sheet. Note that the meaning of "excellent fatigue resistance" is that, for example, a smoothed test piece with an as rolled surface not subjected to descaling exhibits a 2,000,000 cycle fatigue strength of 580 MPa or more in a pull-pull-type axial tensile fatigue test at a stress amplitude of 0.05 in terms of stress ratio.

### [Solution to Problem]

It is generally known that the fatigue strength increases with the strength of the steel (material). However, it has been found that, regarding the fatigue phenomena of thin steel sheets, there are some cases where the fatigue strength decreases with an increase in strength of the base material of the steel sheet. The inventors of the present invention extensively investigated various factors that affect the fatigue resistance of thin steel sheets. As a result, they have found that the fatigue phenomenon in the thin steel sheets is mostly caused by fatigue cracks in the surface layer of a steel sheet since the cracks grow, propagate, and finally cause fracture, and that the properties of the steel sheet surface layer significantly affect the fatigue resistance of the thin steel sheet. That is, they have found that occurrence of fatigue cracks is greatly affected by the properties of the steel sheet surface layer, such as irregularities on the steel sheet surface and the microstructure of the steel sheet surface layer. In particular, they have found that when the microstructure of the surface layer region having a depth of 500 µm from the surface in a sheet thickness direction is controlled to contain 50% or more of a fine bainite phase and the irregularities on the steel sheet surface are reduced as much as possible through descaling for hot rolling, the resistance to occurrence of fatigue cracks, in other words, the anti-fatigue-cracking property, is improved, and the anti-fatigue-crack-propagation property is improved.

The inventors have also found that when the microstructure in the central portion of the steel sheet in the thickness direction is controlled to contain 90% or more of a fine bainite phase in terms of area fraction, the fatigue crack propagation property can be improved while retaining a desired high strength.

The present invention has been made based on these findings and further studies. The present invention can be summarized as follows.
(1) A high strength hot rolled steel sheet having a thickness exceeding 4 mm and excellent fatigue resistance and a composition containing, in terms of mass%, C: 0.05 to 0.15%, Si: 0.2 to 1.2%, Mn: 1.0 to 2.0%, P: 0.03% or less, S: 0.0030% or less, Al: 0.005 to 0.10%, N: 0.006% or less, and at least one selected from Ti: 0.03 to 0.13%, Nb: 0.02 to 0.10%, and V: 0.02 to 0.15%, optionally at least one selected from Cr: 0.01 to 0.2%, Mo: 0.005 to 0.2%, Cu: 0.005 to 0.2%, and Ni: 0.005 to 0.2%, optionally B: 0.0002 to 0.003%, and optionally one or both of Ca: 0.0005 to 0.03% and REM: 0.0005 to 0.03%, the balance being Fe and unavoidable impurities, in which a surface layer portion having a depth of 500 µm from the surface in the sheet thickness direction contains 50% or more of a bainite phase in terms of area fraction, the bainite phase having an average grain diameter of 5 µm or less; a sheet thickness center portion that extends from a position located at a depth of 1/4 of the sheet thickness to a position located at a depth of 3/4 of the sheet thickness contains 90% or more of a bainite phase in terms of area fraction, the bainite phase having an average grain diameter of 4 µm or less; a tensile strength TS is 780 MPa or more, and a 2,000,000 cycle fatigue strength of 580 MPa or more.
(2) A method for manufacturing a high strength hot rolled steel sheet having a thickness exceeding 4 mm and excellent fatigue resistance, the method including heating a steel to 1100 to 1250°C, the steel having a composition that contains, in terms of mass%, C: 0.05 to 0.15%, Si: 0.2 to 1.2%, Mn: 1.0 to 2.0%, P: 0.03% or less, S: 0.0030% or less, Al: 0.005 to 0.10%, N: 0.006% or less, and at least one selected from Ti: 0.03 to 0.13%, Nb: 0.02 to 0.10%, and V: 0.02 to 0.15%, optionally at least one selected from Cr: 0.01 to 0.2%, Mo: 0.005 to 0.2%, Cu: 0.005 to 0.2%, and Ni: 0.005 to 0.2%, optionally B: 0.0002 to 0.003%, and optionally one or both of Ca: 0.0005 to 0.03% and REM: 0.0005 to 0.03%, the balance being Fe and unavoidable impurities, and performing hot rolling that includes rough rolling and finish rolling so as to prepare a hot rolled steel sheet, in which a reduction during the rough rolling is 85% or more, a finish rolling delivery temperature (surface temperature) of the finish rolling is set to a temperature in the range of 800 to 950°C, cooling is started within 1.5 seconds after completion of the finish rolling, the cooling is conducted in two stages including a first-stage cooling process of cooling the finish rolled sheet from the finish rolling delivery temperature to a first-stage cooling end temperature in the range of 550 to 610°C at an average cooling rate of 25°C/sec. or more and a second-stage cooling process of cooling the finish rolled sheet from the first-stage cooling end temperature to a coiling temperature at an average cooling rate of 100°C/sec. or more, and coiling is conducted at a coiling temperature of 350 to 550°C.

### [Advantageous Effects of Invention]

According to the present invention, a high strength hot rolled steel sheet that has a tensile strength TS of 780 MPa or more and excellent fatigue resistance can be easily manufactured at low cost and significant industrial advantages are achieved. Moreover, the present invention also contributes to weight reduction of the automobile bodies and thickness and weight reduction of various industrial mechanical parts.

### [Brief Description of Drawings]

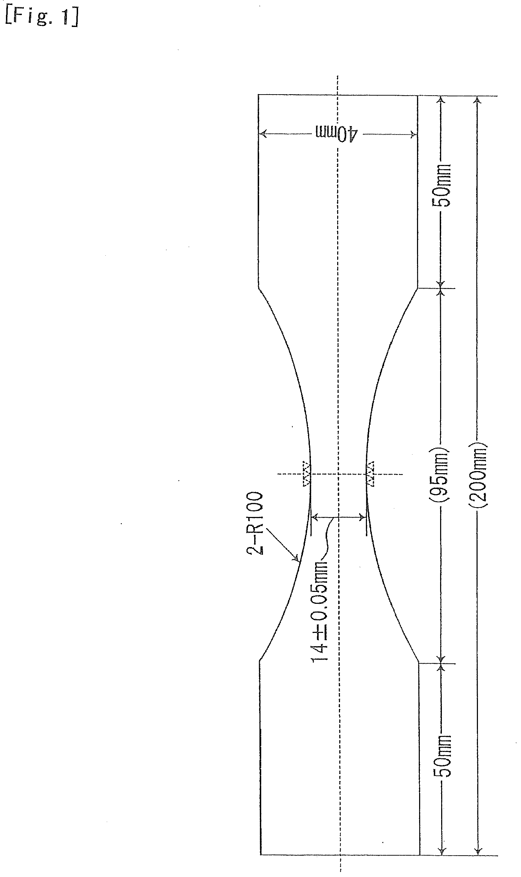

Fig. 1 is a schematic diagram showing dimensions and shape of a test piece for fatigue test used in Examples.

### [Description of Embodiments]

The reasons for limiting the composition of the steel sheet of the present invention will now be described. The mass% is simply denoted as % unless otherwise noted.

### C: 0.05 to 0.15%

Carbon (C) is an element that increases the steel sheet strength through transformation strengthening and contributes to making a finer bainite phase. In order to achieve such effects, the C content needs to be 0.05% or more. Meanwhile, at a C content exceeding 0.15%, the weldability is degraded. Thus the C content is limited to be in the range of 0.05 to 0.15% and preferably more than 0.07% but not more than 0.11%.

### Si: 0.2 to 1.2%

Silicon (Si) is an element that increases the steel sheet strength through solid-solution strengthening and contributes to improving the ductility of the steel sheet. In order to achieve these effects, the Si content needs to be 0.2% or more. At a Si content exceeding 1.2%, the properties of the steel sheet surface are degraded and it becomes difficult to suppress irregularities on the steel sheet surface even when descaling is extensively conducted during hot rolling. Accordingly, the Si content is limited to be in the range of 0.2 to 1.2% and preferably 0.2 to 0.8%.

### Mn: 1.0 to 2.0%

Manganese (Mn) is an element that increases the steel sheet strength through solid-solution strengthening and transformation strengthening. In order to achieve this effect, the Mn content needs to be 1.0% or more. At a Mn content exceeding 2.0%, significant center segregation occurs and various properties are notably degraded. Accordingly, the Mn content is limited to be in the range of 1.0 to 2.0% and preferably 1.2 to 1.9%.

### P: 0.03% or less

Phosphorus (P) is an element that has an effect of increasing the strength of the steel sheet by forming a solid solution; however, phosphorus readily forms an inner oxide layer in the steel sheet surface layer during the production of the hot rolled steel sheet and may adversely affect occurrence and propagation of fatigue cracks. Thus, the P content is preferably as low as possible while a P content up to 0.03% is allowable. Accordingly, the P content is limited to 0.03% or less and preferably 0.02% or less.

### S: 0.0030% or less

Sulfur (S) forms sulfides and decreases the ductility and workability of the steel sheet. Thus, the S content is preferably as low as possible. However, a S content up to 0.0030% is allowable. Thus, the S content is limited to 0.0030% or less, preferably 0.0020% or less, and more preferably 0.0010% or less.

### Al: 0.005 to 0.10%

Aluminum (Al) is an element that acts as a deoxidizer and an Al content of 0.005% or more is needed to achieve such an effect. At an Al content exceeding 0.10%, the amount of oxides increases significantly and fatigue properties and various other properties of the steel sheet are degraded. Accordingly, the Al content is limited to be in the range of 0.005 to 0.10% and preferably 0.015 to 0.06%.

### N: 0.006% or less

Nitrogen (N) bonds to nitride-forming elements, forms nitride precipitates, and contributes to making finer crystal grains. However, when the N content is large, coarse nitrides are formed and cause degradation of workability. Accordingly, the N content is desirably reduced as much as possible but a N content up to 0.006% is allowable. Accordingly, the N content is limited to 0.006% or less, preferably 0.005% or less, and more preferably 0.004% or less.

### At least one selected from Ti: 0.03 to 0.13%, Nb: 0.02 to 0.10%, and V: 0.02 to 0.15%

Titanium (Ti), niobium (Nb), and vanadium (V) all form carbonitrides that make finer crystal grains, contribute to increasing the strength through precipitation strengthening and improving the hardenability, and play an important role in forming the bainite phase. At least one of Ti, Nb, and V is contained. In order to achieve these effects, the Ti content needs to be 0.03% or more, the Nb content needs to be 0.02% or more, and the V content needs to be 0.02% or more. Meanwhile, at a Ti content exceeding 0.13%, a Nb content exceeding 0.10%, and a V content exceeding 0.15%, deformation resistance increases, the rolling load during hot rolling increases, and the load on the rolling machine is excessively increased, thereby making the rolling operation difficult. Incorporation of these elements exceeding these values will result in formation of coarse precipitates and a decrease in fatigue properties and other various properties. Accordingly, when these elements are to be contained, the content ranges are limited to Ti: 0.03 to 0.13%, Nb: 0.02 to 0.10%, and V: 0.02 to 0.15%, and preferably Ti: 0.05 to 0.12%, Nb: 0.02 to 0.07%, and V: 0.02 to 0.10%.

The components described above are the basic components. In addition to these basic components, at least one selected from Cr: 0.01 to 0.2%, Mo: 0.005 to 0.2%, Cu: 0.005 to 0.2%, and Ni: 0.005 to 0.2%, and/or B: 0.0002 to 0.003%, and/or one or both of Ca: 0.0005 to 0.03% and REM: 0.0005 to 0.03% may be contained as optional elements.

### At least one selected from Cr: 0.01 to 0.2%, Mo: 0.005 to 0.2%, Cu: 0.005 to 0.2%, and Ni: 0.005 to 0.2%

Chromium (Cr), molybdenum (Mo), copper (Cu), and nickel (Ni) all have an effect of improving hardenability and, in particular, are elements that lower the bainite transformation temperature and contribute to making a finer bainite phase. At least one of Cr, Mo, Cu, and Ni may be selected as needed and contained. In order to achieve these effects, the contents of these elements need to be Cr: 0.01% or more, Mo: 0.005% or more, Cu: 0.005% or more, and Ni: 0.005% or more. At a Cr content exceeding 0.2%, the corrosion resistance is degraded. At a Mo content exceeding 0.2%, the effects are saturated and effects corresponding to the content are not to be expected, which is economically disadvantageous. At a Cu content exceeding 0.2% and a Ni content exceeding 0.2%, surface defects are generated during hot rolling and a Cu- or Ni-rich layer remains in the steel sheet surface, promoting the generation of fatigues cracks. Accordingly, when these elements are to be contained, their contents thereof are preferably limited to Cr: 0.01 to 0.2%, Mo: 0.005 to 0.2%, Cu: 0.005 to 0.2%, and Ni: 0.005 to 0.2%, and more preferably Cr: 0.01 to 0.1%, Mo: 0.005 to 0.1%, Cu: 0.005 to 0.1%, and Ni: 0.005 to 0.1%.

### B: 0.0002 to 0.003%

Boron (B) segregates in grain boundaries and increases the grain boundary strength. This effect is exhibited at a B content of 0.0002% or more. However, at a B content exceeding 0.003%, cracks may occur in welded portions. Accordingly, when B is to be contained, the B content is preferably limited to be in the range of 0.0002 to 0.003% and more preferably 0.0002 to 0.0015%.

### One or both of Ca: 0.0005 to 0.03% and REM: 0.0005 to 0.03%

Calcium (Ca) and rare earth metals (REM) both effectively work to control morphology of sulfides and one or both of Ca and REM may be selected and contained. This effect is exhibited at a Ca content of 0.0005% or more and a REM content of 0.0005% or more. However, at a Ca content exceeding 0.03% and a REM content exceeding 0.03%, the effects are saturated and the effects that correspond to the contents are not expected. Thus, when these elements are to be contained, their contents are preferably limited to be in the ranges of Ca: 0.0005 to 0.03% and REM: 0.0005 to 0.03% and more preferably Ca: 0.0005 to 0.005% and REM: 0.0005 to 0.005%.

The balance other than the components described above is Fe and unavoidable impurities.

Next, the reasons for limiting the microstructure of the hot rolled steel sheet of the present invention are described.

A hot rolled steel sheet of the present invention has a surface layer portion having a microstructure that includes 50% or more of a fine bainite phase in terms of area fraction and a sheet thickness center portion having a microstructure that includes 90% or more of a bainite phase in terms of area fraction.

Regarding the fatigue properties of thin steel sheets, the properties of the surface layer portion are the crucial factor that controls the fatigue properties. According to a hot rolled steel sheet of the present invention, the microstructure of the surface layer portion includes, in terms of area fraction, 50% or more of a main phase constituted by a fine bainite phase having an average grain size of 5 µm or less. Here, the "surface layer portion" means a portion having a depth of 500 µm from the surface in the sheet thickness direction. The surface layer portion is limited to a portion having a depth of 500 µm from the surface in the sheet thickness direction because when the length of the fatigue cracks increases to be more than 0.5 mm, propagation of the fatigue cracks is mainly determined by dynamic factors and the steel sheet microstructure has little effects thereon.

When the microstructure of the surface layer portion has a main phase constituted by a fine bainite phase having an average grain diameter of 5 µm or less, generation of fatigue cracks can be suppressed while ensuring the desired high strength, and the fatigue resistance can be improved. When the area fraction of the bainite phase in the surface layer portion is less than 50% or the average grain diameter of the bainite phase is more than 5 µm, the ability to suppress generation of fatigue cracks decreases notably. Preferably, the average grain diameter is 4 µm or less. Here, "bainite" refers to bainite and bainitic ferrite other than polygonal ferrite, pearlite, martensite, and carbides.

In the surface layer portion, a phase other than the main phase, bainite, is a secondary phase. Examples of the secondary phase include martensite, pearlite, and retained γ. From the viewpoint of suppressing generation of fatigue cracks, the area fraction of the secondary phase is preferably 20% or less.

In the hot rolled steel sheet of the present invention, the microstructure of the sheet thickness center portion includes, in terms of area fraction, 90% or more of a main phase, which is a fine bainite phase having an average grain diameter of 4 µm or less. The "sheet thickness center portion" means a portion that extends from a position located at a depth of 1/4 of the sheet thickness to a position located at a depth of 3/4 of the sheet thickness.

When the main phase of the microstructure of the sheet thickness center portion is a fine bainite phase having an average particle diameter of 4 µm or less, propagation of fatigue cracks can be suppressed while ensuring the desired high strength. As the fraction of the bainite phase increases or as the bainite phase becomes finer, the yield strength increases, the plastic range at the crack tips decreases, and the propagation of the fatigue cracks can be delayed. If the area fraction of the fine bainite phase is less than 90% or the average grain diameter of the bainite phase is more than 4 µm, the ability to suppress propagation of the fatigue cracks decreases notably. Preferably, the average grain diameter of the bainite phase is 3.5 µm or less and the area fraction of the bainite phase is 95% or more.

Examples of the secondary phase other than the main phase in the sheet thickness center portion include a martensite phase, pearlite, and a retained γ phase. The fraction of the secondary phase is preferably less than 10% in terms of area fraction from the viewpoint of suppressing the progress of fatigue cracks. The sheet thickness center portion may be a single phase solely constituted by a main phase, which is a fine bainite phase.

Next, a preferred method for manufacturing a hot rolled steel sheet according to the present invention is described. A steel having the composition described above is heated and subjected to hot-rolling that includes rough rolling and finish rolling to manufacture a hot rolled steel sheet. The method for manufacturing the steel is not particularly limited. Any common method that includes preparing a molten steel having the composition described above by melting in a converter or the like and casting the molten steel by, for example, a continuous casting method, can be employed so as to prepare a steel such as a slab. An ingot casting-cogging method may be used without any problem.

### Heating temperature: 1100 to 1250°C

First, the steel is heated. In the present invention, the heating temperature is an important factor for forming a fine bainite phase in the surface layer portion and is within the range of 1100 to 1250°C. At a heating temperature less than 1100°C, carbonitrides precipitated in the steel do not sufficiently re-melt and the effects desirably achieved by incorporation of the alloy elements cannot be exhibited. When the heating temperature is as high as more than 1250°C, the austenite grains in the surface layer of the steel become coarse and thus the bainite phase in the surface layer also becomes coarse ultimately. Moreover, heating at such a high temperature generates low-melting-point eutectic oxides containing Si in the scale and these oxides penetrate the steel sheet surface layer through grain boundaries and promote generation and propagation of fatigue cracks. Thus, the heating temperature of the steel is limited to be in the range of 1100 to 1250°C.

The heated steel is subjected to hot-rolling that includes rough rolling and finish rolling so that a hot rolled steel sheet having desired dimensions and shape is obtained.

### Reduction at rough rolling: 85% or more

In order to control the surface property of the end product steel sheet to a desired surface property, the 85% reduction in the rough rolling should be 85% or more. The reduction is calculated by {(slab thickness) - (rough-rolled bar thickness)}/(slab thickness) × 100 (%). The reduction is 85% or more.

When the reduction of the rough rolling is increased, the grain boundary oxides and granular oxides formed in the heating furnace are stretched and the surface property, such as surface irregularities, on the end product steel sheet can be controlled to a surface property that contributes to suppression of generation of fatigue cracks. Note that before rough rolling or finish rolling or during the course of rolling between the stands, descaling is preferably performed.

### Finish rolling temperature: 800 to 950°C

After rough rolling, finish rolling is conducted. In finish rolling, rolling is performed at a finish rolling delivery temperature 800 to 950°C. If the finish rolling delivery temperature is less than 800°C, the rolling is conducted in a two-phase temperature region, and thus a coarse worked structure remains in the steel sheet surface layer, resulting in a decrease in fatigue resistance. In contrast, when the finish rolling delivery temperature is higher than 950°C, the austenite grains become excessively coarse, the surface layer microstructure of the end product steel sheet is constituted by a coarse bainite phase, and the fatigue resistance is decreased. Accordingly, the finish rolling delivery temperature is limited to be in the range of 800 to 950°C and more preferably 830 to 920°C. The finish rolling delivery temperature here is a surface temperature.

Cooling is started within 1.5 second after completion of the finish rolling. Cooling is conducted in two stages, namely, first-stage cooling and second-stage cooling. In the first-stage cooling, the first-stage cooling end temperature is 550 to 610°C and cooling is performed from the finish rolling delivery temperature to the first-stage cooling end temperature at an average cooling rate of 25°C/sec. or more. In the second-stage cooling, cooling from the first-stage cooling end temperature to the coiling temperature is performed at an average cooling rate of 100°C/sec. or more, followed by coiling. This temperature is a surface temperature.

### Average cooling rate from finish rolling delivery temperature to cooling end temperature of 550 to 610°C: 25°C/sec. or more

At a cooling rate less than 25°C/sec., pro-eutectoid ferrite is precipitated and a desired microstructure having a main phase constituted by a bainite phase cannot be obtained in the surface layer and the sheet thickness center portion. Accordingly, in the first-stage cooling, the average cooling rate from the finish rolling delivery temperature to the first-stage cooling stop temperature is limited to 25°C/sec. or more. Note that although there is no need to define the upper limit of the cooling rate in the first-stage cooling, the production cost will increase significantly if the average cooling rate is increased to more than 300°C/sec. Accordingly, the upper limit is preferably about 300°C/sec.

The first-stage cooling end temperature is 550 to 610°C. If the cooling end temperature is less than 550°C or more than 610°C, it becomes difficult to reliably obtain a desired microstructure. Accordingly, the cooling end temperature in the first-stage cooling is limited to be in the range of 550 to 610°C.

### Average cooling rate from the first-stage cooling end temperature to coiling temperature: 100°C/sec. or more

The steel sheet having the composition within the range of the present invention undergoes an austenite-to-bainite transformation in this temperature range. Cooling in this temperature range is critical for ensuring formation of a desired fine bainite microstructure. When the cooling rate in the second-stage cooling is 100°C/sec. or more so that rapid cooling is conducted, a fine bainite microstructure can be formed in the surface layer portion and the sheet thickness center portion. At an average cooling rate less than 100°C/sec., the microstructure becomes coarse during cooling and it is no longer possible to obtain a fine bainite phase having an average grain diameter of 5 µm or less in the surface layer portion and an average grain diameter of 4 µm or less in the sheet thickness center portion. Thus, the average cooling rate in the second-stage cooling is limited to 100°C/sec. or more. There is no need to define the upper limit of the cooling rate in the second-stage cooling. However, the production cost will increase significantly if the average cooling rate is more than 350°C/sec. Accordingly, the upper limit is preferably about 350°C/sec.

### Coiling temperature: 350 to 550°C

At a coiling temperature less than 350°C, a hard martensite phase is formed and a desired microstructure cannot be obtained, resulting in decreased fatigue resistance and failure to satisfy the required formability. When the coiling temperature is as high as more than 550°C, a pearlite phase is sometimes formed and the fatigue resistance will be degraded. Accordingly, the coiling temperature is limited to be in the range of 350 to 550°C, preferably 500°C or less, and more preferably 450°C or less.

After coiling, scale formed on the surface may be removed by pickling through a typical method. Naturally, after the pickling treatment, the hot rolled sheet may be temper-rolled or subjected to a plating treatment such as a galvanizing treatment or electroplating, or a chemical conversion treatment. The present invention is expected to exhibit enhanced effects when applied to hot rolled steel sheets having a thickness exceeding 4 mm.

### [EXAMPLES]

Molten steels having compositions shown in Table 1 were prepared by melting in a converter and continuously casted into steel slabs (steel materials). Each steel slab was heated and subjected to hot rolling including rough rolling and finish rolling under conditions shown in Table 2. After completion of the finish rolling, cooling was performed under the conditions described in Table 2 and coiling was performed at a coiling temperature shown in Table 2 so as to obtain a hot rolled steel sheet having a thickness shown in Table 2. Note that the cooling was started within 1.5 seconds after completion of the finish rolling. In the table, in the first-stage cooling, the average cooling rate from the finish rolling delivery temperature to the cooling end temperature is shown. In the second-stage cooling, the average cooling rate from the first-stage cooling end temperature to the coiling temperature is shown.

A test specimen was taken from the obtained hot rolled steel sheet and subjected to structural observation, tensile test, and fatigue test so as to evaluate the strength and fatigue resistance. The testing methods were as follows.

### (1) Structural observation

A test specimen for structural observation was taken from the obtained hot rolled steel sheet. A sheet cross-section taken parallel to the rolling direction was polished and corroded with a 3% nital solution to expose the microstructure, and the microstructures of the surface layer portion and the sheet thickness center portion were observed with a scanning electron microscope (magnification: 3,000). Five or more areas of observations were photographed and image-processed to calculate the microstructure fractions of the respective phases and the average grain diameter of the bainite phase. In the surface layer portion, a first photograph was taken at a position from which a 50 µm depth portion is removed from the outermost surface. The subsequent photographs were taken at 50 µm intervals from that position. In the sheet thickness center portion, a total of five photographs were taken respectively at five positions at depths of 2/8, 3/8, 4/8, 5/8, and 6/8 of the sheet thickness.

The average grain diameter was determined by drawing two lines perpendicularly intersecting each other, having a length of 80 mm, and being inclined 45° in the thickness direction on a photograph of the microstructure obtained, measuring the length of the intercept for each grain, and calculating the arithmetic average of the intercepts. The obtained average value was assumed to be the average grain diameter of the bainite phase of that steel sheet.

The surface layer portion refers to a region having a depth of 500 µm from the surface in the thickness direction. The sheet thickness central portion refers to a region that extends from the position located at a depth of 1/4 of the sheet thickness to the position located at a depth of 3/4 of the sheet thickness in the thickness direction.

### (2) Tensile test

A JIS No. 5 specimen (GL: 50 mm) was taken from the obtained hot rolled steel sheet so that the tensile direction was perpendicular to the rolling direction and a tensile test was carried out according to JIS Z 2241. The tensile properties (yield strength (yield point) YP, tensile strength TS, and elongation El) were determined.

### (3) Fatigue test

A smoothed test piece having dimensions and shape shown in Fig. 1 was taken from the obtained hot rolled steel sheet having an as-forged surface so that the longitudinal direction of the test piece was perpendicular to the rolling direction, and an axial tensile fatigue test was carried out. The stress load mode was pull-pull at a stress ratio R of 0.05 and the frequency was 15 Hz. The load stress amplitude was varied in 6 stages, the stress cycle to rupture was measured, the S-N curve was determined, and the 2,000,000 cycle fatigue strength (stress amplitude) was determined.

The results are shown in Table 3.

### [Table 1]

**Table 1**

| Steel No. | Chemical composition (mass%) | | | | | | | | | | | Reference |
|---|---|---|---|---|---|---|---|---|---|---|---|---|
| | C | Si | Mn | P | S | Al | N | Ti, Nb, V | Cr, Ni, Mo, Cu | B | Ca, REM | |
| A | 0.052 | 0.46 | 1.46 | 0.028 | 0.0018 | 0.069 | 0.0055 | Ti: 0.035, Nb: 0.050, V: 0.02 | - | 0.0002 | REM: 0.0019 | Example |
| B | 0.105 | 1.04 | 1.99 | 0.011 | 0.0022 | 0.055 | 0.0039 | Ti: 0.093 | Cu: 0.015, Ni: 0.024 | - | - | Example |
| C | 0.071 | 0.62 | 1.29 | 0.008 | 0.0006 | 0.028 | 0.0027 | Ti: 0.104 | - | - | - | Example |
| D | 0.092 | 1.19 | 1.15 | 0.023 | 0.0029 | 0.022 | 0.0023 | Ti: 0.118 | - | - | Ca: 0.0028 | Example |
| E | 0.109 | 0.78 | 1.25 | 0.018 | 0.0009 | 0.059 | 0.0033 | Ti: 0.055 | Cr: 0.2 | - | - | Example |
| F | 0.142 | 0.21 | 1.09 | 0.006 | 0.0014 | 0.011 | 0.0010 | Ti: 0.129 | Mo: 0.012 | - | - | Example |
| G | 0.052 | 0.61 | 1.31 | 0.011 | 0.0010 | 0.029 | 0.0032 | Ti: 0.142 | - | - | - | Comparative Example |
| H | 0.061 | 0.92 | 1.45 | 0.015 | 0.0020 | 0.038 | 0.0039 | Ti: 0.169, Nb: 0.059 | Ni: 0.04, Cr: 0.05 | - | - | Comparative Example |
| I | 0.069 | 1.41 | 1.71 | 0.007 | 0.0011 | 0.044 | 0.0019 | Ti: 0.055 | - | - | - | Comparative Example |
| J | 0.087 | 0.77 | 1.54 | 0.015 | 0.0008 | 0.031 | 0.0026 | Nb: 0.069 | - | 0.0012 | - | Example |
| K | 0.059 | 0.35 | 1.23 | 0.019 | 0.0013 | 0.018 | 0.0019 | V: 0.113 | - | - | - | Example |
| L | 0.099 | 1.11 | 2.24 | 0.021 | 0.0018 | 0.051 | 0.0046 | Nb: 0.079, V: 0.039 | - | - | - | Comparative Example |

### [Table 2]

**Table 2**

| Hot rolled steel sheet No. | Steel No. | Thickness mm | Hot rolling conditions | | | Cooling conditions | | | Coiling condition | Reference *** |
|---|---|---|---|---|---|---|---|---|---|---|
| | | | Heating temperature (°C) | Rough rolling reduction (%) | Finish rolling delivery temperature (°C) | First stage cooling | | Second stage cooling | Coiling temperature (°C) | |
| | | | | | | Average cooling rate* (°C/sec.) | Cooling end temperature (°C) | Average cooling rate** (°C/sec.) | | |
| 1 | A | 2.5 | 1085 | 89 | 890 | 155 | 590 | 230 | 505 | Comparative Example |
| 2 | A | 2.5 | 1120 | 88 | 875 | 175 | 565 | 215 | 475 | Comparative Example |
| 3 | A | 4.5 | 1210 | 82 | 945 | 225 | 560 | 160 | 330 | Comparative Example |
| 4 | B | 2.5 | 1180 | 91 | 870 | 190 | 555 | 245 | 405 | Comparative Example |
| 5 | C | 6.0 | 1195 | 88 | 895 | 125 | 580 | 155 | 425 | Example |
| 6 | C | 6.0 | 1215 | 80 | 975 | 40 | 595 | 110 | 495 | Comparative Example |
| 7 | C | 6.0 | 1225 | 82 | 920 | 20 | 600 | 100 | 425 | Comparative Example |
| 8 | D | 6.0 | 1175 | 81 | 865 | 40 | 555 | 130 | 540 | Comparative Example |
| 9 | E | 4.5 | 1200 | 84 | 890 | 40 | 605 | 120 | 410 | Comparative Example |
| 10 | F | 2.5 | 1250 | 88 | 825 | 180 | 585 | 105 | 385 | Comparative Example |
| 11 | G | 2.5 | 1230 | 83 | 905 | 45 | 550 | 195 | 345 | Comparative Example |
| 12 | H | 4.5 | 1215 | 65 | 875 | 55 | 600 | 110 | 525 | Comparative Example |
| 13 | I | 2.5 | 1200 | 80 | 855 | 25 | 595 | 55 | 465 | Comparative Example |
| 14 | J | 2.5 | 1245 | 87 | 865 | 115 | 560 | 205 | 395 | Comparative Example |
| 15 | K | 4.5 | 1135 | 85 | 889 | 95 | 595 | 145 | 465 | Example |
| 16 | L | 2.5 | 1295 | 82 | 835 | 220 | 560 | 185 | 395 | Comparative Example |

| | | | | | | | | | | |
|---|---|---|---|---|---|---|---|---|---|---|
| *) Average cooling rate from finish rolling delivery temperature to cooling end temperature ***) with regard to method of the invention **) Average cooling rate from first-stage cooling end temperature to coiling temperature | | | | | | | | | | |

### [Table 3]

**Table 3**

| Hot rolled steel sheet No. | Steel No. | Microstructure of surface layer portion | | | Microstructure of sheet thickness center portion | | | Tensile properties | | | Fatigue resistance | Reference *** | |
|---|---|---|---|---|---|---|---|---|---|---|---|---|---|
| | | Type* | B fraction (area%) | B average grain diameter (micrometer) | Type* | B fraction (area%) | B average grain diameter (micrometer) | YS (MPa) | TS (MPa) | EI (%) | Fatigue strength** | | |
| 1 | A | B, F, P, M | 41.0 | 5.5 | B, F, M | 89.0 | 6.3 | 612 | 766 | 19.3 | 505 | Comparative Example | |
| 2 | A | B, F, P, M | 83.0 | 4.8 | B, F, M | 95.5 | 3.8 | 743 | 865 | 22.9 | 650 | Comparative Example | **** |
| 3 | A | B, F, P, M | 46.0 | 6.7 | B, F, M | 12.0 | 7.7 | 714 | 883 | 21.7 | 489 | Comparative Example | |
| 4 | B | B, F, M | 89.0 | 3.3 | B, F, M | 98.0 | 2.3 | 882 | 985 | 18.5 | 695 | Comparative Example | **** |
| 5 | C | B, F, P | 75.0 | 3.9 | B, F, M | 96.0 | 3.1 | 728 | 822 | 27.9 | 645 | Example | |
| 6 | C | B, F, P | 47.0 | 9.4 | B, F, M | 79.0 | 7.9 | 699 | 789 | 21.1 | 505 | Comparative Example | |
| 7 | C | B, F, P | 28.0 | 6.5 | B, F, P | 35.5 | 7.1 | 686 | 796 | 22.6 | 515 | Comparative Example | |
| 8 | D | B, F, P | 66.0 | 4.1 | B, F, P | 96.5 | 3.9 | 722 | 819 | 24.9 | 555 | Comparative Example | |
| 9 | E | B, F, M | 58.0 | 4.7 | B, F, P | 99.0 | 3.3 | 731 | 836 | 23.6 | 575 | Comparative Example | |
| 10 | F | B, F, M | 55.0 | 4.7 | B, F, M | 97.5 | 1.9 | 887 | 992 | 21.7 | 680 | Comparative Example | **** |
| 11 | G | B, F, P | 38.0 | 8.8 | B, F, M | 24.0 | 10.1 | 599 | 744 | 19.4 | 490 | Comparative Example | |
| 12 | H | B, F, P | 42.0 | 6.5 | B, F, P | 78.0 | 4.6 | 716 | 805 | 20.9 | 530 | Comparative Example | |
| 13 | I - | B, F, P | 55.0 | 6.1 | B, F, M | 84.0 | 6.9 | 701 | 790 | 19.5 | 525 | Comparative Example | |
| 14 | J | B, F, M | 65.5 | 4.1 | B, F, M | 97.0 | 3.3 | 745 | 926 | 19.3 | 615 | Comparative Example | **** |
| 15 | K | B, F, P | 65.5 | 4.4 | B, F, P | 96.0 | 3.8 | 694 | 798 | 24.5 | 565 | Comparative Example | |
| 16 | L | M, F, B | 4.3 | 8.9 | M, B | 12.1 | 3.8 | 921 | 1022 | 12.9 | 535 | Comparative Example | |

| | | | | | | | | | | | | | |
|---|---|---|---|---|---|---|---|---|---|---|---|---|---|
| *) B: bainite, M: martensite, F: ferrite, P: pearlite **) 2,000,000 cycle fatigue strength ***) with regard to steel sheet of the invention ****) "Comparative Example" because of steel sheet thickness | | | | | | | | | | | | | |

In all of the examples of the present invention, a high strength hot rolled steel sheet that has a high strength, i.e., a tensile strength TS of 780 MPa or more and excellent fatigue resistance, i.e., a 2,000,000 cycle fatigue strength of 580 MPa or more was obtained. In contrast, in comparative examples outside the range of the present invention, the required strength or fatigue resistance of both the required strength and fatigue resistance were not satisfied.

## Claims

1. A high strength hot rolled steel sheet having a thickness exceeding 4 mm and excellent fatigue resistance and a composition containing, in terms of mass%,
| | |
|---|---|
| C: 0.05 to 0.15%, | Si: 0.2 to 1.2%, |
| Mn: 1.0 to 2.0%, | P: 0.03% or less, |
| S: 0.0030% or less, | Al: 0.005 to 0.10%, |
| N: 0.006% or less, | |
and at least one selected from Ti: 0.03 to 0.13%, Nb: 0.02 to 0.10%, and V: 0.02 to 0.15%, optionally at least one selected from Cr: 0.01 to 0.2%, Mo: 0.005 to 0.2%, Cu: 0.005 to 0.2%, and Ni: 0.005 to 0.2%, optionally B: 0.0002 to 0.003%, and optionally one or both of Ca: 0.0005 to 0.03% and REM: 0.0005 to 0.03%, the balance being Fe and unavoidable impurities,
wherein a surface layer portion having a depth of 500 µm from the surface in the sheet thickness direction contains 50% or more of a bainite phase in terms of area fraction, the bainite phase having an average grain diameter of 5 µm or less; a sheet thickness center portion that extends from a position located at a depth of 1/4 of the sheet thickness to a position located at a depth of 3/4 of the sheet thickness contains 90% or more of a bainite phase in terms of area fraction, the bainite phase having an average grain diameter of 4 µm or less; a tensile strength TS is 780 MPa or more, and a 2,000,000 cycle fatigue strength of 580 MPa or more in a pull-pull-type axial tensile fatigue test at a stress amplitude of 0.05 in terms of stress ratio, wherein
bainite refers to bainite and bainitic ferrite other than polygonal ferrite, pearlite, martensite, and carbides;
the average grain diameter is determined by taking a test specimen from the hot rolled steel sheet; a sheet cross-section taken parallel to the rolling direction is polished and corroded with a 3% nital solution to expose the microstructure; the microstructures of the surface layer portion and the sheet thickness center portion are observed with a scanning electron microscope , magnification: 3000; five or more areas of observations are photographed and image-processed to calculate the microstructure fractions of the respective phases and the average grain diameter of the bainite phase; in the surface layer portion, a first photograph is taken at a position from which a 50 µm depth portion is removed from the outermost surface; the subsequent photographs are taken at 50 µm intervals from that position; in the sheet thickness center portion, a total of five photographs are taken respectively at five positions at depths of 2/8, 3/8, 4/8, 5/8, and 6/8 of the sheet thickness; and the average grain diameter is determined by drawing two lines perpendicularly intersecting each other, having a length of 80 mm, and being inclined 45° in the thickness direction on the photograph of the microstructure obtained, measuring the length of the intercept for each grain, and calculating the arithmetic average of the intercepts.

2. A method for manufacturing a high strength hot rolled steel sheet having a thickness exceeding 4 mm and excellent fatigue resistance, comprising heating a steel to 1100 to 1250°C, the steel having a composition that contains, in terms of mass%,
| | |
|---|---|
| C: 0.05 to 0.15%, | Si: 0.2 to 1.2%, |
| Mn: 1.0 to 2.0%, | P: 0.03% or less, |
| S: 0.0030% or less, | Al: 0.005 to 0.10%, |
| N: 0.006% or less, | |
and at least one selected from Ti: 0.03 to 0.13%, Nb: 0.02 to 0.10%, and V: 0.02 to 0.15%, optionally at least one selected from Cr: 0.01 to 0.2%, Mo: 0.005 to 0.2%, Cu: 0.005 to 0.2%, and Ni: 0.005 to 0.2%, optionally B: 0.0002 to 0.003%, and optionally one or both of Ca: 0.0005 to 0.03% and REM: 0.0005 to 0.03%, the balance being Fe and unavoidable impurities, and performing hot rolling that includes rough rolling and finish rolling so as to prepare a hot rolled steel sheet, wherein a reduction during the rough rolling is 85% or more, a finish rolling delivery temperature of the finish rolling is set to a temperature in the range of 800 to 950°C, cooling is started within 1.5 seconds after completion of the finish rolling, the cooling is conducted in two stages including a first-stage cooling process of cooling the finish rolled sheet from the finish rolling delivery temperature to a first-stage cooling end temperature in the range of 550 to 610°C at an average cooling rate of 25°C/sec. or more and a second-stage cooling process of cooling the finish rolled sheet from the first-stage cooling end temperature to a coiling temperature at an average cooling rate of 100°C/sec. or more, and coiling is conducted at a coiling temperature of 350 to 550°C, where the finish rolling delivery temperature is a surface temperature.

## Patentansprüche

1. Hochfestes warmgewalztes Stahlblech mit einer Dicke, die 4 mm übersteigt, exzellentem Ermüdungswiderstand und einer Zusammensetzung, die, in Bezug auf Massen%,
| | |
|---|---|
| C: 0,05 bis 0,15%, | Si: 0,2 bis 1,2%, |
| Mn: 1,0 bis 2,0%, | P: 0,03% oder weniger, |
| S: 0,0030% oder weniger, | Al: 0,005 bis 0,10%, |
| N: 0,006% oder weniger, | |
und zumindest eines ausgewählt aus Ti: 0,03 bis 0,13%, Nb: 0,02 bis 0,10% und V: 0,02 bis 0,15%, optional zumindest eines ausgewählt aus Cr: 0,01 bis 0,2%, Mo: 0,005 bis 0,2%, Cu: 0,005 bis 0,2% und Ni: 0,005 bis 0,2%, optional B: 0,0002 bis 0,003% und optional eines oder beide aus Ca: 0,0005 bis 0,03% und REM: 0,0005 bis 0,03% enthält, wobei der Rest aus Fe und unvermeidbaren Verunreinigungen besteht,
wobei ein Oberflächenschichtabschnitt, der eine Tiefe von 500 µm von der Oberfläche in die Blechdickenrichtung aufweist, hinsichtlich Flächenanteil 50% oder mehr einer Bainitphase beinhaltet, wobei die Bainitphase einen durchschnittlichen Korndurchmesser von 5 µm oder weniger aufweist; ein zentraler Blechdickenabschnitt, der sich von einer Position, die sich bei einer Tiefe von 1/4 der Blechdicke befindet, zu einer Position, die sich bei einer Tiefe von 3/4 der Blechdicke befindet, erstreckt, hinsichtlich Flächenanteil 90% oder mehr einer Bainitphase beinhaltet, wobei die Bainitphase einen durchschnittlichen Korndurchmesser von 4 µm oder weniger aufweist; eine Zugfestigkeit TS 780 MPa oder mehr beträgt, und eine 2 000 000-Zyklen-Ermüdungsfestigkeit von 580 MPa oder mehr in einem Axialzugermüdungstest des Zug-Zug-Typs bei einer Spannungsamplitude von 0,05 hinsichtlich des Spannungsverhältnisses, wobei
Bainit Bainit und bainitisches Ferrit, anders als polygonales Ferrit, Perlit, Martensit und Karbide, bezeichnet;
die durchschnittliche Korngröße durch das Entnehmen eines Prüfkörpers aus dem warmgewalzten Stahlblech bestimmt wird; ein Blechquerschnitt, der parallel zur Walzrichtung entnommen wird, poliert und mit einer 3% Nital-Lösung korrodiert wird, um das Gefüge sichtbar zu machen; das Gefüge des Oberflächenschichtabschnitts und des zentralen Blechdickenabschnitts mit einem Rasterelektronenmikroskop beobachtet werden, Vergrößerung: 3000; Fünf oder mehr Beobachtungsbereiche fotografiert und bildverarbeitet werden, um die Gefügeanteile der jeweiligen Phasen und den durchschnittlichen Korndurchmesser der Bainitphase zu berechnen; in dem Oberflächenschichtabschnitt ein erstes Bild bei einer Position aufgenommen wird, von der ein 50 µm Tiefenabschnitt von der äußersten Oberfläche entfernt wurde; die folgenden Bilder in 50 µm Intervallen von dieser Position aufgenommen werden; in dem zentralen Blechdickenabschnitt eine Gesamtanzahl von fünf Bildern jeweils an fünf Positionen bei Tiefen von 2/8, 3/8, 4/8, 5/8 und 6/8 der Blechdicke aufgenommen wird; und der durchschnittliche Korndurchmesser durch das Zeichnen zweier Linien, die sich senkrecht kreuzen, eine Länge von 80 mm haben und um 45° in der Dickenrichtung auf dem erhaltenen Bild des Gefüges geneigt sind, Messen der Länge des Schnittpunktabschnitte für jedes Korn und Berechnen des arithmetischen Durchschnitts der Schnittpunktabschnitte bestimmt wird.

2. Verfahren zur Herstellung eines hochfesten warmgewalzten Stahlblechs mit einer Dicke, die 4 mm übersteigt, und exzellentem Ermüdungswiderstand, umfassend das Aufheizen eines Stahls auf 1100 bis 1250°C, wobei der Stahl eine Zusammensetzung aufweist, die, in Bezug auf Massen%,
| | |
|---|---|
| C: 0,05 bis 0,15%, | Si: 0,2 bis 1,2%, |
| Mn: 1,0 bis 2,0%, | P: 0,03% oder weniger, |
| S: 0,0030% oder weniger, | Al: 0,005 bis 0,10%, |
| N: 0,006% oder weniger, | |
und zumindest eines ausgewählt aus Ti: 0,03 bis 0,13%, Nb: 0,02 bis 0,10% und V: 0,02 bis 0,15%, optional zumindest eines ausgewählt aus Cr: 0,01 bis 0,2%, Mo: 0,005 bis 0,2%, Cu: 0,005 bis 0,2% und Ni: 0,005 bis 0,2%, optional B: 0,0002 bis 0,003% und optional eines oder beide aus Ca: 0,0005 bis 0,03% und REM: 0,0005 bis 0,03% enthält, wobei der Rest aus Fe und unvermeidbaren Verunreinigungen besteht, und das Durchführen von Warmwalzen, das Vorwalzen und Endwalzen beinhaltet, um ein warmgewalztes Stahlblech bereitzustellen, wobei eine Reduktion während des Vorwalzens 85% oder mehr beträgt, eine Endwalzausgabetemperatur des Endwalzens auf eine Temperatur in dem Bereich von 800 bis 950°C festgelegt wird, Abkühlen innerhalb von 1,5 Sekunden nach dem Abschluss des Endwalzens begonnen wird, das Abkühlen in zwei Stufen durchgeführt wird, beinhaltend einen Abkühlprozess der ersten Stufe des Abkühlens des endgewalzten Bleches von der Endwalzausgabetemperatur auf eine Kühlendtemperatur der ersten Stufe in dem Bereich von 550 bis 610°C bei einer durchschnittlichen Abkühlgeschwindigkeit von 25°C/Sek. oder mehr und einen Abkühlprozess der zweiten Stufe des Abkühlens des endgewalzten Bleches von der Kühlendtemperatur der ersten Stufe auf eine Haspeltemperatur bei einer durchschnittlichen Abkühlgeschwindigkeit von 100°C/Sek. oder mehr, und Aufwickeln bei einer Haspeltemperatur von 350 bis 550°C durchgeführt wird, wobei die Endwalzausgabetemperatur eine Oberflächentemperatur ist.

## Revendications

1. Tôle d'acier laminé à chaud à haute résistance ayant une épaisseur dépassant 4 mm et une excellente résistance à la fatigue et une composition contenant, en termes de % en masse,
C : 0,05 à 0,15 %,
Si : 0,2 à 1,2 %,
Mn : 1,0 à 2,0 %,
P : 0,03 ou moins,
S : 0,0030 % ou moins,
Al : 0,005 à 0,10 %,
N : 0,006 % ou moins,
et au moins un sélectionné parmi Ti : 0,03 à 0,13 %, Nb : 0,02 à 0,10 %, et V : 0,02 à 0,15 %, facultativement au moins un sélectionné parmi Cr : 0,01 à 0,2 %, Mo : 0,005 à 0,2 %, Cu : 0,005 à 0,2 %, et Ni : 0,005 à 0,2 %, facultativement B : 0,0002 à 0,003 %, et facultativement un ou les deux parmi Ca : 0,0005 à 0,03 % et REM : 0,0005 à 0,03 %, le reste étant Fe et des impuretés inévitables,
dans laquelle une portion de couche de surface ayant une profondeur de 500 µm à partir de la surface dans la direction d'épaisseur de tôle contient 50% ou plus d'une phase bainite en termes de fraction de surface, la phase bainite ayant un diamètre moyen de grain de 5 µm ou moins ; une portion centrale d'épaisseur de tôle qui se s'étend à partir d'une position située à une profondeur représentant 1/4 de l'épaisseur de tôle jusqu'à une position située à une profondeur représentant 3/4 de l'épaisseur de tôle contient 90 % ou plus d'une phase bainite en termes de fraction de surface, la phase bainite ayant un diamètre moyen de grain de 4 µm ou moins ; une résistance à la traction TS est de 780 MPa ou plus, et une résistance à la fatigue après 2 000 000 de cycle de 580 MPa ou plus dans un test de fatigue par traction axiale de type traction-traction à une amplitude de contrainte de 0,05 en termes de rapport de contrainte, dans laquelle
bainite fait référence à une bainite et une ferrite bainitique autre qu'une ferrite polygonale, une perlite, une martensite, et des carbures ;
le diamètre moyen de grain est déterminé en prélevant un échantillon de test à partir de la tôle d'acier laminé à chaud ; une section transversale de tôle prise parallèle à la direction de laminage est polie et corrodée avec une solution de nital à 3 % pour exposer la microstructure ; les microstructures de la portion de couche de surface et de la portion centrale d'épaisseur de tôle sont observées avec un microscope électronique à balayage, grossissement : 3000 ; cinq zones d'observation ou plus sont photographiées et soumises à un traitement d'image pour calculer les fractions de microstructure des phases respectives et le diamètre moyen de grain de la phase bainite ; dans la portion de couche de surface, une première photographiée est prise à une position à partir de laquelle une portion de profondeur de 50 µm est retirée de la surface la plus externe ; les photographies suivantes sont prises à des intervalles de 50 µm à partir de cette position ; dans la portion centrale d'épaisseur de tôle, cinq photographies au total sont prises respectivement à cinq positions à des profondeurs représentant 2/8, 3/8, 4/8, 5/8, et 6/8 de l'épaisseur de tôle ; et le diamètre moyen de grain est déterminé en traçant deux lignes perpendiculaires se croisant l'une et l'autre, ayant une longueur de 80 mm, et étant inclinées de 45° dans la direction d'épaisseur sur la photographie de la microstructure obtenue, en mesurant la longueur de l'ordonnée à l'origine pour chaque grain, et en calculant la moyenne arithmétique des ordonnées à l'origine.

2. Procédé pour fabriquer une tôle d'acier laminé à chaud à haute résistance ayant une épaisseur dépassant 4 mm et une excellente résistance à la fatigue, comprenant le chauffage d'un acier entre 1100 et 1250 °C, l'acier ayant une composition qui contient, en termes de % en masse,
C : 0,05 à 0,15 %,
Si : 0,2 à 1,2 %,
Mn : 1,0 à 2,0 %,
P : 0,03 ou moins,
S : 0,0030 % ou moins,
Al : 0,005 à 0,10 %,
N : 0,006 % ou moins,
et au moins un sélectionné parmi Ti : 0,03 à 0,13 %, Nb : 0,02 à 0,10 %, et V : 0,02 à 0,15 %, facultativement au moins un sélectionné parmi Cr : 0,01 à 0,2 %, Mo : 0,005 à 0,2 %, Cu : 0,005 à 0,2 %, et Ni : 0,005 à 0,2 %, facultativement B : 0,0002 à 0,003 %, et facultativement un ou les deux parmi Ca : 0,0005 à 0,03 % et REM : 0,0005 à 0,03 %, le reste étant Fe et des impuretés inévitables, et la mise en oeuvre d'un laminage à chaud qui inclut un laminage à l'état brut et un laminage de finition afin de préparer une tôle d'acier laminé à chaud, dans lequel une réduction lors du laminage à l'état brut est de 85 % ou plus, une température de distribution de laminage de finition du laminage de finition est réglée à une température située dans la plage allant de 800 à 950 °C, un refroidissement est initié moins de 1,5 seconde après la fin du laminage de finition, le refroidissement est effectué en deux stades incluant un procédé de refroidissement de premier stade comprenant le refroidissement de la tôle ayant subi le laminage de finition à partir de la température de distribution de laminage de finition jusqu'à une température finale de refroidissement de premier stade dans la plage allant de 550 à 610 °C à une vitesse moyenne de refroidissement de 25 °C/sec ou plus et un procédé de refroidissement de second stade comprenant le refroidissement de la tôle ayant subi le laminage de finition à partir de la température finale de refroidissement de premier stade jusqu'à une température de bobinage à une vitesse moyenne de refroidissement de 100 °C/sec ou plus, et un bobinage est effectué à une température de bobinage de 350 à 550 °C, la température de distribution de laminage de finition étant une température de surface.
